# EUROPEAN PATENT APPLICATION

(11) **EP 2 026 349 A2**
(43) Date of publication of application: **18.02.2009**
(21) Application number: 08013993.4
(22) Date of filing: 05.08.2008
(51) Int. Cl.: G11B 23/03, G11B 33/04

(54) **Media disc cartridge and method of manufacturing the same**

(30) Priority: 06.08.2007 US 954207 P; 10.07.2008 US 170559
(71) Applicant: Nexpak Corporation a Delaware Corporation, Georgia 30096 (US)
(72) Inventor: Heuser, Mark, E., Strongsville, Ohio 44149-0948 (US)
(74) Representative: Hanson, William Bennett

(57) **Abstract**

The present invention provides a disc cartridge for enclosing an optical disc rotatable therein. The disc cartridge includes an upper shell connected to a lower shell. The upper shell includes a center portion, a window portion surrounding the center portion and a frame surrounding the window portion. The upper shell is formed using a two-shot injection molding process in which a window portion is injection molded and a center opening is formed in the window portion. The center portion and the frame are formed substantially simultaneously by injection molding a common material within the center opening and around the perimeter of the window portion.

## Description

### CROSS REFERENCE TO RELATED APPLICATIONS

This application claims the benefit of United States Provisional Patent Application serial number 60/954,207 filed 06 August 2007; the disclosures of which are incorporated herein by reference.

### BACKGROUND OF THE INVENTION

### 1. Technical Field

The invention generally relates to disc cartridges and, more particularly, to a disc cartridge for enclosing a media disc such as a Universal Media Disc. The invention also relates to a method of manufacturing a disc cartridge for enclosing a media disc such as a Universal Media Disc.

### 2. Background Information

Optical discs, from which recorded information is read using a light beam or to which information is written using a light beam, are widely used as media for recording audio and video information, computer-processed data, and the like. Information processing units, such as computers, audio and visual display and recording devices, and handheld video game devices, are being designed to be more compact with an increasingly smaller internal space for a recording and/or reading apparatus using an optical recording medium, such as an optical disc. Accordingly, a pervasive trend in optical disc manufacture is to increase the amount of data that can be stored per unit area on an optical disc. Examples of such smaller optical discs having larger storage capacity can be found in U.S. Patent Nos. 6,704,275, 6,747,943 and 6,785,222 all to Sony Corporation, each of which are incorporated herein by reference in their entireties. One specific example of such an optical disc is known as a Universal Media Disc (UMD), which can be used, for example, with Sony's PlayStation Portable (PSP) game device.

When dealing with such compact optical discs, it can be desirable to encase or otherwise protect the discs in a disc cartridge in which the discs are encased and rotatable therein for reading and/or writing by an appropriate information processing device.

Generally speaking, such a disc cartridge can include a pair of halves or shells connected to one another, which encase the optical disc. One conventional method of forming such a disc cartridge includes forming a frame portion, allowing the frame portion to cool, forming a center window portion, allowing the center window portion to cool and precisely applying a sticker or other indicia, including printed media, graphics or information, on the center portion of the window to hide unsightly manufacturing blemishes, such as marks from gating that are common when using injection molding. This conventional method of manufacture suffers from various drawbacks, such as lengthy manufacturing times, difficulty in placing the sticker in the appropriate position on the window portion, and difficulty in matching the color of the frame portion and the center sticker portion.

### Summary of the Invention

The present invention provides a disc cartridge for encasing an optical disc rotatable therein. The cartridge includes an upper shell having a center portion, a window portion surrounding the center portion, and a frame surrounding the window portion. In one exemplary construction, the upper shell is formed in a single mold using a two-shot injection molding process. In such a process, the window portion is injection molded and a center opening is formed in the window portion. This piece is transferred into a second cavity in the mold where the center portion and the frame are formed substantially simultaneously by injection molding a common material within the center opening and around the perimeter of the window portion. This formation process provides manufacturing efficiencies as well as a cartridge that is aesthetically pleasing.

According to one aspect of the invention, there is provided a disc cartridge for encasing an optical disc. The disc cartridge includes an upper shell and a lower shell connected to the upper shell to form a cavity for encasing an optical disc. The upper shell comprises a center portion, a window surrounding the center portion and a frame surrounding the window portion.

According to another aspect of the invention, there is provided a method of forming an upper shell of an optical disc cartridge for encasing an optical disc. The method includes forming a window portion, forming a center opening in the window portion and substantially simultaneously forming (i) a frame around a perimeter of the window portion, and (ii) a center portion within the center opening of the window portion.

According to another aspect of the invention, there is provided a method of forming a cartridge for enclosing an optical disc. The method includes forming a lower shell portion, forming an upper shell portion and connecting the lower and upper shells with an optical disc enclosed therebetween. Forming the upper shell portion includes injection molding a window portion, forming a center opening in the window portion and substantially simultaneously injection molding (i) a frame around a perimeter of the window portion, and (ii) a center portion within the center opening of the window portion.

The foregoing and other features of the invention are hereinafter more fully described and particularly pointed out in the claims, the following description setting forth in detail certain illustrative configurations of the invention, these being indicative, however, of but a few of the various ways in which the principles of the invention may be employed.

### Brief Description of Drawings

These and further features of the present invention will be apparent with reference to the following description and drawings, wherein:
Fig. 1 is a perspective view of an upper portion/shell of a disc cartridge in accordance with the present invention;
Fig. 2 is a perspective view of a lower portion/shell of a disc cartridge in accordance with the present invention;
Fig. 3 is a top view of the upper shell of a disc cartridge in accordance with the present invention;
Fig. 4 is a bottom view of the upper shell of a disc cartridge in accordance with the present invention;
Fig. 5 is a sectional view of the upper shell of Fig. 3 taken along line 5-5;
Fig. 6 is an enlarged view of a portion of Fig. 5;
Fig. 7 is a flow chart illustrating a method of fabricating the upper shell of a disc cartridge in accordance with the present invention; and
Figs. 8-10 illustrate top views depicting fabricating steps in accordance with the present invention.

### Detailed Description

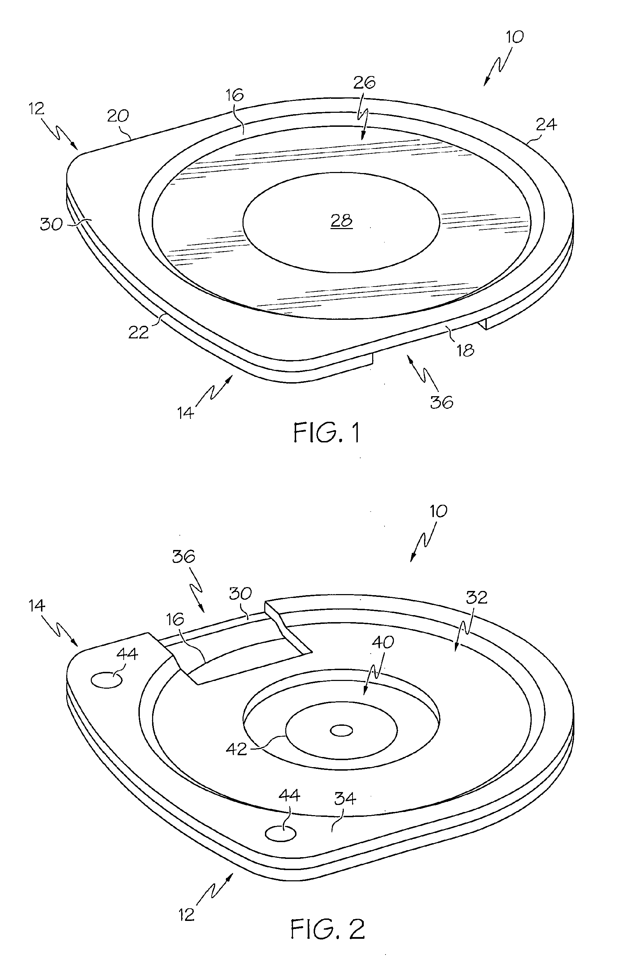

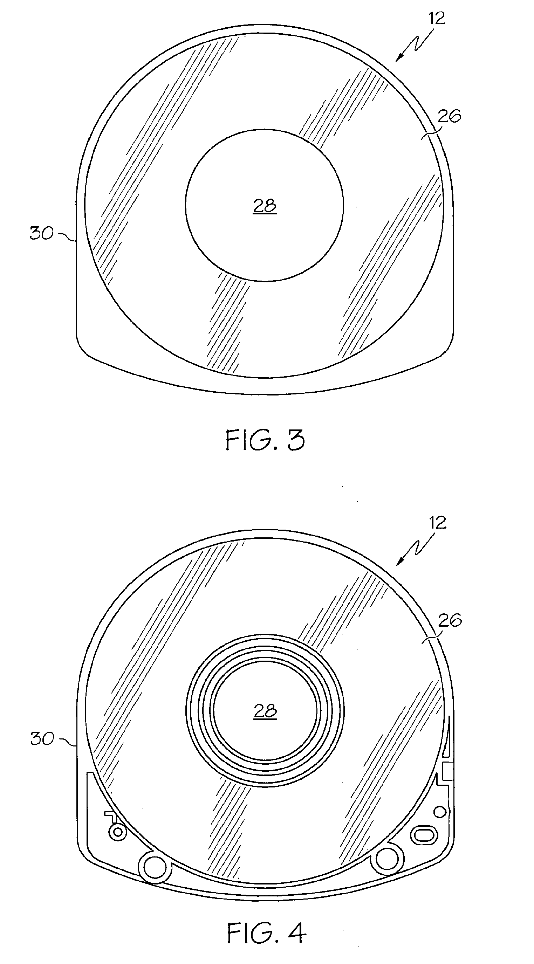

Referring to Figs. 1-4, an exemplary disc cartridge according to the present invention is indicated generally by the numeral 10. Disc cartridge 10 includes an upper portion or shell 12 that is connected to a lower portion or shell 14 to form cartridge 10 in which an optical disc 16 is encased. Cartridge 10 is sized such that an optical disc, for example, a relatively compact optical disc, such as is described in U.S. Patent Nos. 6,704,275, 6,747,943 and 6,785,222 owned by Sony Corporation, the disclosures of which are hereby incorporated by reference in their entireties, can be encased therein such that optical disc 16 is free to rotate within cartridge 10. In one exemplary configuration, cartridge 10 is sized to accommodate an optical disc having a diameter of 65 millimeters or less. While the present invention is being described with respect to a cartridge for encasing relatively small optical discs, it is to be appreciated that a cartridge may be employed with larger optical discs without departing from the scope of the present invention.

In the illustrated configuration, cartridge 10 includes a pair of relatively straight and parallel sides 18 and 20 that are each connected to a gently curving - or gently curving C-shaped - side 22 and a relatively curved - or curved U-shaped - side 24. Other suitable cartridge geometries may be employed without departing from the scope of the present invention. Cartridge 10 is relatively thin, for example, having a thickness of about three millimeters to about six millimeters according to the thickness of the optical disc to be encased therein.

Upper shell 12 includes a window portion 26, a center portion 28 and a frame 30. As shown in Fig. 1, window portion 26 surrounds center portion 28, and frame 30 surrounds window portion 26. Window portion 26 may be made of a substantially light transparent (e.g., a clear) material while center portion 28 and frame 30 are made of a substantially opaque material. While this combination of materials is believed to present an aesthetically pleasing appearance, each of window portion 26, center portion 28 and frame 30 can be made of other materials. As is described more fully below, center portion 28 and frame 30 are preferably made from the same material. As used herein, the "same material" can include a material having a common composition and/or appearance. As is discussed more fully below, upper shell 12 of cartridge 10 is formed by way of a two-shot injection molding process, preferably within a single mold, such that the window portion is formed of a first material, e.g., a substantially light-transparent resin material, while center portion 28 and frame 30 are formed of another common material, e.g., a substantially opaque resin material.

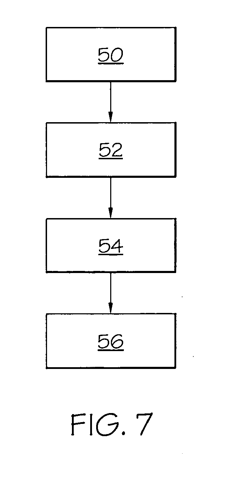

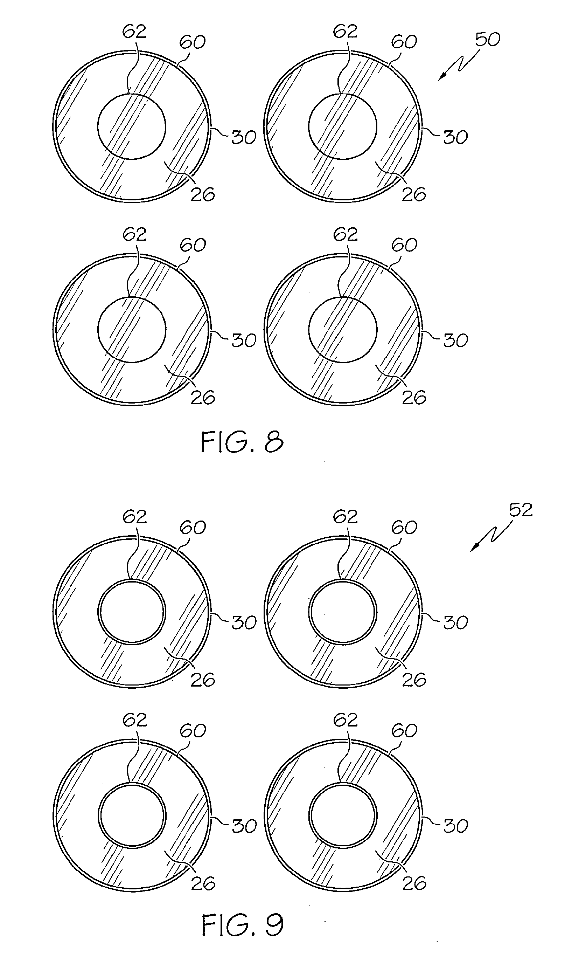

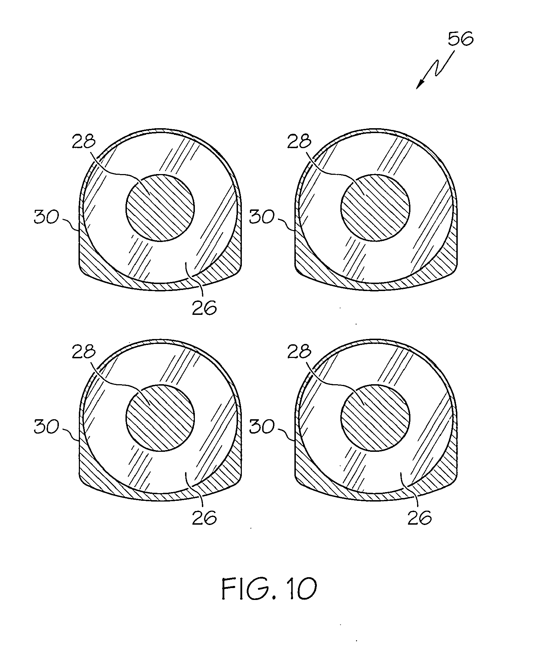

Lower shell 14 includes a window portion 32 that is surrounded by a frame 34. In one configuration, window portion 32 is made of a substantially light-transparent (e.g., clear) material, while frame 34 is made of a substantially opaque material. Lower shell 14 has formed therein a reading/writing access opening 36 through which a portion of optical disc 16 encased therein is exposed, and which allows an optical pickup unit of a recording and/or reading apparatus to access optical disc 16. In addition, lower shell 14 defines a central opening 40 through which a hub 42 of optical disc 16 is exposed. Central opening 40 is disposed generally at the center of lower shell 14, while access opening 36 is spaced from central opening 40 and extending substantially to the edge of cartridge 10. Further, lower shell 14 defines two or more positioning holes 44 for positioning disc cartridge 10 with respect to the information processing device in which it is inserted. In the illustrated configuration, positioning holes 44 are of a different size and/or geometry and are defined within frame 34 of lower shell 14. Referring now to Fig. 7, a method of forming upper shell 12 of disc cartridge 10 is provided. In one configuration, the steps illustrated in Fig. 7 are performed using an injection molding apparatus in which two-shot injection molding is performed, using a single mold having multiple cavities therein. In one configuration, the mold is constructed such that a plurality of pieces, e.g., eight pieces, can be formed at one time. For simplicity of explanation, Figs. 8-10 schematically illustrate the manufacturing steps of the method shown in Fig. 7 as performed to fabricate four upper shells at one time. It is to be appreciated that greater or fewer than eight pieces can be formed at one time by way of the method described herein.

At step 50, a plurality of window portions 26 are formed by injecting a first material, e.g., a substantially light-transparent or clear resin, into a first set of cavities within the mold. The window portions may be substantially circular in shape, however, other geometries may be employed without departing from the scope of the present invention. The light-transparent resin can include any suitable resin, such as polycarbonate and the like. The window portions are formed using a center gating technique in which the resin is injected generally into the center of the cavity and allowed to disperse throughout the cavity. Because the general principles of injection molding are well known, they will not be described in great detail herein.

At step 52, a center opening or hole is formed in each of the window portions. The center opening can be formed using a hydraulic cutter punch. This technique allows for efficient removal of the gating portion of the window, thereby providing a clean and aesthetically pleasing window portion.

At step 54, the mold is opened and each of the center punched window portions are moved from the first set of cavities within the mold into a second set of cavities within the mold. The window pieces can be moved into the second set of cavities via a robotic arm or the like that vacuum picks up each piece. At the same time, the center punched piece including the gating can be removed to an appropriate waste area. In other words, the plurality of center punched window portions are simultaneously moved into a second set of cavities within the same mold. As the plurality of pieces are moved in the second set of cavities, another set of window portions can be formed in the first set of cavities in the above-described manner.

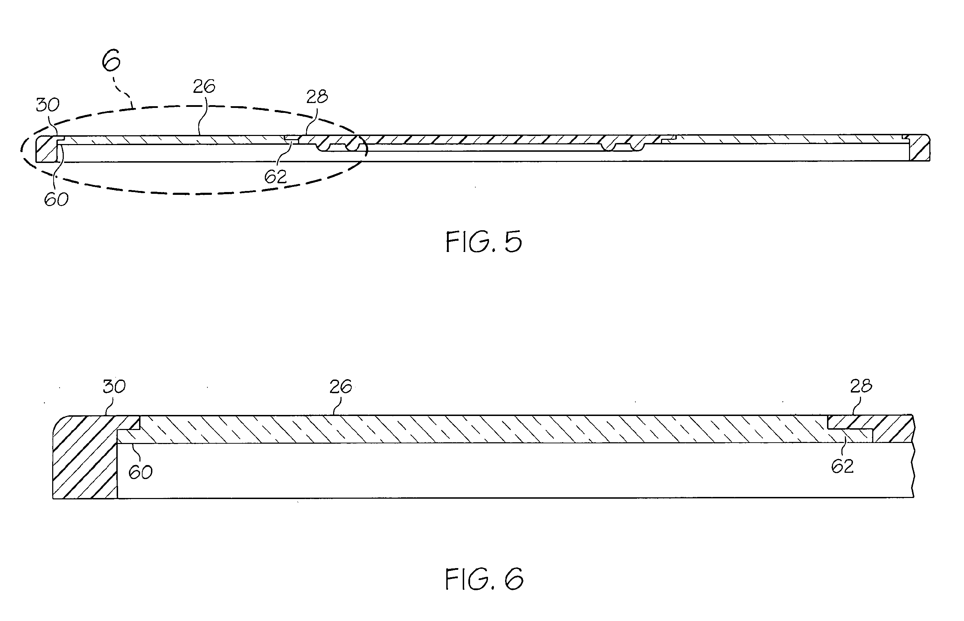

At step 56, once the plurality of window pieces have been moved into the second set of cavities within the mold, the mold is closed and the center portion and frame are substantially simultaneously injection molded, thereby forming center portion 28 and frame 30. Center portion 28 and frame 30 may be formed from a common material, e.g., an opaque resin, such as polycarbonate. Specifically, center portion 28 and frame 30 will be injection molded by injecting resin through a pair of core side gates, one gate for forming center portion 28 and at least one other gate for forming frame 30. As can be seen in Figs. 5 and 6, window portion 26 is molded to include a pair of reduced thickness portions 60 and 62. Reduced thickness portion 60 is formed generally around the outer perimeter of window portion 26, while reduced thickness portion 62 is formed generally around the area that will make up center portion 28 of upper shell 12. Molding window 26 to include these reduced thickness portions 60 and 62 facilitates efficient molding and a structurally sturdy upper shell 12 when the second injection molding shot that forms center portion 28 and frame 30 is injected. As shown in Figs. 5 and 6, window 26 joins frame 30 at first reduced thickness portion 60, while window 26 joins center portion 28 at second reduced thickness portion 62.

Once center portion 28 and frame 30 are injection molded and the piece has cooled sufficiently, upper shells 12, e.g. eight upper shells, will be ejected and may undergo further processing. For example, desirable graphics or lettering may be formed on one or both of center portion 28 and frame 30. One advantage of the single-mold, two-shot injection molding method described herein is that a near perfect, if not perfect, color match can be achieved between center portion 28 and frame 30, thereby providing an aesthetically pleasing upper shell 12.

The method described herein can be contrasted with a prior art method in which the window portion is formed as a single piece of clear plastic without any punching, and an adhesive label must be precisely positioned on the center portion of the window in order to mask any gating marks from the view of the user. The conventional method is disadvantageous because it is difficult to consistently and accurately position a label on the center of the window, and it is difficult, to provide a sufficient color match between the label adhered to the center of the window and frame. In addition, the method described herein is advantageous because it provides significant time savings in forming the upper shell when compared to the conventional method referenced above. It is believed that the method described herein provides a time savings of up to 50% (per set of upper shells) over the above-referenced conventional method.

Although the invention has been shown and described with respect to certain configuration or configurations, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary configuration or configurations of the invention. In addition, while a particular feature of the invention may have been described above with respect to only one or more of several illustrated configurations, such feature may be combined with one or more other features of the other configurations, as may be desired and advantageous for any given or particular application.

## Claims

1. A method of forming an upper shell of an optical disc cartridge for encasing an optical disc, the method comprising:
forming a window portion;
forming an opening in the window portion; and
forming (i) a frame around a perimeter of the window portion, and (ii) a center portion within the opening of the window portion.

2. The method of claim 1, further comprising the step of forming the upper shell using a two-shot injection molding process, the first shot forming the window portion and the second shot forming the frame and the center portion.

3. The method of claim 1, further comprising the steps of forming the window portion from a substantially light-transparent resin and forming the frame and the center portion from a common substantially opaque resin.

4. The method of claim 1, further comprising the step of forming the opening in the window portion with a hydraulic cutter punch.

5. The method of claim 1, further comprising the step of forming the window portion and the opening to be substantially circular.

6. The method of claim 1, further comprising the steps of:
forming the window portion with a first reduced thickness portion around its perimeter and a second reduced thickness portion around the opening; and
joining the center portion with the window portion at the second reduced thickness portion and joining the frame with the window portion at the first reduced thickness portion.

7. The method of claim 1, further comprising the step of substantially simultaneously injection molding (i) the frame around the perimeter of the window portion, and (ii) the center portion within the opening of the window portion.

8. A disc cartridge for encasing an optical disc, the disc cartridge comprising:
an upper shell;
a lower shell connected to the upper shell to form a cavity for encasing an optical disc; and
the upper shell including a center portion, a window portion surrounding the center portion and a frame surrounding the window portion.

9. The disc cartridge of claim 8, wherein the window portion is formed from a first material and the frame and the center portion are formed from a common second material; the first material being a substantially light transparent resin, and the second material being a substantially opaque resin.

10. The disc cartridge of claim 8, wherein the window has an inner perimeter and an outer perimeter; the window defining a reduced thickness portion at each of the inner and outer perimeters; the frame and center portions being connected to the window portion at the reduced thickness portions.

11. The disc cartridge of claim 8, wherein the connections between the frame and center portions with the window portion are free of adhesive.
